# EUROPEAN PATENT APPLICATION

(11) **EP 3 608 023 A1**
(43) Date of publication of application: **12.02.2020**
(21) Application number: 19190027.3
(22) Date of filing: 05.08.2019
(51) Int. Cl.: B01L 3/02

(54) **CHEMICAL SOLUTION DISCHARGE DEVICE**

(30) Priority: 10.08.2018 JP 2018151330
(71) Applicant: Toshiba Tec Kabushiki Kaisha, 141-8562 Tokyo (JP)
(72) Inventor: YOKOYAMA, Shuhei, Shinagawa-ku, Tokyo 141-8562 (JP); KUSUNOKI, Ryutaro, Shinagawa-ku, Tokyo 141-8562 (JP); WONG, MengFei, Shinagawa-ku, Tokyo 141-8562 (JP)
(74) Representative: Bandpay & Greuter

(57) **Abstract**

A chemical solution discharge device includes substrates, holding containers, a plurality of first actuators, a plurality of second actuators, a first conductive wire, and a second conductive wire. The substrate is formed with a plurality of first pressure chambers and a plurality of second pressure chambers respectively adjacent to the plurality of first pressure chambers, and includes chemical solution supply ports for supplying the chemical solution to the plurality of first pressure chambers and second pressure chambers. The plurality of first actuators change the pressure of the chemical solution in the plurality of first pressure chambers. The plurality of second actuators change the pressure of the chemical solution in the plurality of second pressure chambers. The first conductive wire supplies a first driving signal to the plurality of first actuators. The second conductive wire supplies a second driving signal to the plurality of second actuators.

## Description

### FIELD

Embodiments described herein relate generally to a chemical solution discharge device and a chemical solution processing system.

### BACKGROUND

In research and development in fields of biology and pharmacology, medical diagnosis and examination, and agricultural testing, an operation of dispensing picoliter (pL) to microliter (µL) liquid may be performed.

Since the above is generally referred to as a dose-response experiment and determines the effective concentration of a compound, the compound with many different concentrations is created in a container such as a well of a microplate. There is a chemical solution dropping apparatus for such usage. The chemical solution dropping apparatus includes a removable chemical solution discharge device. Various kinds of chemical solutions are used in the dose-response experiment. Further, the chemical solution discharge device is disposable in order to prevent contamination in medical and bio applications.

In some cases, the chemical solution discharge device simultaneously discharges the chemical solution from a plurality of pressure chambers communicating with one chemical solution holding container. Such a chemical solution discharge device discharges the chemical solution in the pressure chamber from a nozzle by driving an actuator and controlling the pressure in the pressure chamber.

When the chemical solution discharge device drops a highly volatile chemical solution, if the chemical solution in the chemical solution holding container volatilizes such that solute concentration of the chemical solution changes during a dropping operation, the concentration of the chemical solution dropped into each well cannot be accurately grasped. Therefore, it is effective to increase the number of nozzles arranged in a well opening of the microplate as a method of reducing the time for dropping the chemical solution onto the microplate including a large number of wells which has more than 1,536 wells.

However, when the chemical solution is discharged simultaneously from the plurality of nozzles arranged in the well opening of the chemical solution discharge device, crosstalk, in which pressure vibration of the chemical solution in the pressure chamber changes the pressure of the chemical solution in another nearby pressure chamber which communicates via the chemical solution in the chemical solution holding container, is generated. Therefore, as compared with the nozzles positioned in the outer circumferential part, the nozzles positioned on the inner part having a large number of neighboring nozzles are easily influenced by the crosstalk and a discharge speed of the chemical solution becomes slower. Further, as a large number of nozzles are disposed in the well opening and a distance between the nozzles is reduced, the influence of crosstalk becomes larger, thereby also causing a problem that the chemical solution cannot be discharged. Therefore, when a large number of nozzles are arranged in the well opening, an accurate amount of the chemical solution cannot be dropped.

### SUMMARY OF INVENTION

To solve such problem, there is provided a chemical solution discharge device for discharging a chemical solution, comprising: a substrate comprising a plurality of first pressure chambers and a plurality of second pressure chambers respectively adjacent to the plurality of first pressure chambers, which communicate with nozzles for discharging the chemical solution and are filled with the chemical solution, and chemical solution supply ports for supplying the chemical solution to the plurality of first pressure chambers and second pressure chambers; holding containers configured to communicate with the plurality of first pressure chambers and second pressure chambers via the chemical solution supply ports, and to hold the chemical solution; a plurality of first actuators configured to change a pressure of the chemical solution in the plurality of first pressure chambers, and to discharge the chemical solution from the nozzles; a plurality of second actuators configured to change a pressure of the chemical solution in the plurality of second pressure chambers, and to discharge the chemical solution from the nozzles; a first conductive wire configured to supply a first driving signal to the plurality of first actuators; and a second conductive wire configured to supply a second driving signal to the plurality of second actuators.

Preferably, the plurality of second pressure chambers are respectively adjacent to the plurality of first pressure chambers in a first direction and a second direction orthogonal to the first direction.

Preferably still, the first conductive wire supplies, as the first driving signal, a first driving pulse for discharging the chemical solution from the nozzles communicating with the plurality of first pressure chambers, and the second conductive wire supplies, as the second driving signal, a second driving pulse for discharging the chemical solution from the nozzles communicating with the plurality of second pressure chambers during a period different from a period during which the first driving pulse is supplied from the first conductive wire.

Preferably yet, the first conductive wire supplies, as the first driving signal, a first driving pulse formed of a depressurization pulse for expanding a volume of the plurality of first pressure chambers and a pressurization pulse for reducing the volume of the first pressure chambers to discharge the chemical solution from the nozzles communicating with the plurality of first pressure chambers, the second conductive wire supplies, as the second driving signal, a second driving pulse formed of a depressurization pulse for expanding the volume of the plurality of second pressure chambers and a pressurization pulse for reducing the volume of the second pressure chambers to discharge the chemical solution from the nozzles communicating with the plurality of second pressure chambers, and the second conductive wire supplies the depressurization pulse of the second driving signal during a period when the first conductive wire supplies the pressurization pulse of the first driving pulse.

Suitably, the device further comprises: a first drive circuit configured to output the first driving signal; and a second drive circuit configured to output the second driving signal.

Suitably still, each of the plurality of first actuators and second actuators comprises a piezoelectric film.

Suitably still, each of the plurality of first pressure chambers and second pressure chambers has a size L in a depth direction larger than a size D in a width direction.

The invention also relates to a chemical solution discharge device, comprising: a substrate comprising a plurality of first pressure chambers and a plurality of second pressure chambers respectively adjacent to the plurality of first pressure chambers, which communicate with nozzles for discharging the chemical solution and are filled with a chemical solution, and chemical solution supply ports for supplying the chemical solution to the plurality of first pressure chambers and second pressure chambers, wherein each of the plurality of first pressure chambers and second pressure chambers has a size L in a depth direction larger than a size D in a width direction; holding containers configured to communicate with the plurality of first pressure chambers and second pressure chambers via the chemical solution supply ports, and to hold the chemical solution; a plurality of first actuators configured to change a pressure of the chemical solution in the plurality of first pressure chambers, and to discharge the chemical solution from the nozzles; a plurality of second actuators configured to change a pressure of the chemical solution in the plurality of second pressure chambers, and to discharge the chemical solution from the nozzles; a first conductive wire configured to supply a first driving signal to the plurality of first actuators; and a second conductive wire configured to supply a second driving signal to the plurality of second actuators.

Preferably, the plurality of second pressure chambers are respectively adjacent to the plurality of first pressure chambers in a first direction and a second direction orthogonal to the first direction.

Preferably still, the first conductive wire supplies, as the first driving signal, a first driving pulse for discharging the chemical solution from the nozzles communicating with the plurality of first pressure chambers, and the second conductive wire supplies, as the second driving signal, a second driving pulse for discharging the chemical solution from the nozzles communicating with the plurality of second pressure chambers during a period different from a period during which the first driving pulse is supplied from the first conductive wire.

Preferably yet, the first conductive wire supplies, as the first driving signal, a first driving pulse formed of a depressurization pulse for expanding a volume of the plurality of first pressure chambers and a pressurization pulse for reducing the volume of the first pressure chambers to discharge the chemical solution from the nozzles communicating with the plurality of first pressure chambers, the second conductive wire supplies, as the second driving signal, a second driving pulse formed of a depressurization pulse for expanding the volume of the plurality of second pressure chambers and a pressurization pulse for reducing the volume of the second pressure chambers to discharge the chemical solution from the nozzles communicating with the plurality of second pressure chambers, and the second conductive wire supplies the depressurization pulse of the second driving signal during a period when the first conductive wire supplies the pressurization pulse of the first driving pulse.

Suitably, the device further comprises: a first drive circuit configured to output the first driving signal; and a second drive circuit configured to output the second driving signal.

Suitably still, each of the plurality of first actuators and second actuators comprises a piezoelectric film.

The invention also concerns a chemical solution processing system, comprising: a substrate comprising a plurality of first pressure chambers and a plurality of second pressure chambers respectively adjacent to the plurality of first pressure chambers, which communicate with nozzles for discharging a chemical solution and are filled with the chemical solution, and chemical solution supply ports for supplying the chemical solution to the plurality of first pressure chambers and second pressure chambers; holding containers configured to communicate with the plurality of first pressure chambers and second pressure chambers via the chemical solution supply ports, and to hold the chemical solution; a plurality of first actuators configured to change a pressure of the chemical solution in the plurality of first pressure chambers, and to discharge the chemical solution from the nozzles; a plurality of second actuators configured to change a pressure of the chemical solution in the plurality of second pressure chambers, and to discharge the chemical solution from the nozzles; a first conductive wire configured to supply a first driving signal to the plurality of first actuators; a second conductive wire configured to supply a second driving signal to the plurality of second actuators; and a microplate comprising a plurality of well openings for receiving discharged chemical solution from the nozzles.

Preferably, the plurality of second pressure chambers are respectively adjacent to the plurality of first pressure chambers in a first direction and a second direction orthogonal to the first direction.

Preferably still, the first conductive wire supplies, as the first driving signal, a first driving pulse for discharging the chemical solution from the nozzles communicating with the plurality of first pressure chambers, and the second conductive wire supplies, as the second driving signal, a second driving pulse for discharging the chemical solution from the nozzles communicating with the plurality of second pressure chambers during a period different from a period during which the first driving pulse is supplied from the first conductive wire.

Preferably yet, the first conductive wire supplies, as the first driving signal, a first driving pulse formed of a depressurization pulse for expanding a volume of the plurality of first pressure chambers and a pressurization pulse for reducing the volume of the first pressure chambers to discharge the chemical solution from the nozzles communicating with the plurality of first pressure chambers, the second conductive wire supplies, as the second driving signal, a second driving pulse formed of a depressurization pulse for expanding the volume of the plurality of second pressure chambers and a pressurization pulse for reducing the volume of the second pressure chambers to discharge the chemical solution from the nozzles communicating with the plurality of second pressure chambers, and the second conductive wire supplies the depressurization pulse of the second driving signal during a period when the first conductive wire supplies the pressurization pulse of the first driving pulse.

Suitably, the system further comprises: a first drive circuit configured to output the first driving signal; and a second drive circuit configured to output the second driving signal.

Suitably still, each of the plurality of first actuators and second actuators comprises a piezoelectric film.

Suitably yet, each of the plurality of first pressure chambers and second pressure chambers has a size L in a depth direction larger than a size D in a width direction.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a perspective view illustrating a schematic configuration of a discharge system according to a first embodiment;
FIG. 2 is a plan view of an upper surface (a chemical solution holding container side) illustrating a chemical solution discharge device;
FIG. 3 is a plan view of a lower surface (a chemical solution discharge side) illustrating the chemical solution discharge device;
FIG. 4 is a cross-sectional view taken along the line F4-F4 of FIG. 2;
FIG. 5 is a plan view (the chemical solution discharge side) of a chemical solution discharge array taken along the line F5-F5 of FIG. 4;
FIG. 6 is a cross-sectional view taken along the line F6-F6 of FIG. 5;
FIG. 7 is a cross-sectional view taken along the line F7-F7 of FIG. 5;
FIG. 8 illustrates an example of a driving signal;
FIG. 9 illustrates an example of a driving signal according to a second embodiment;
FIG. 10 is a perspective view illustrating a schematic configuration of a discharge system according to a third embodiment;
FIG. 11 is a plan view of a lower surface (a chemical solution discharge side) illustrating a chemical solution discharge device; and
FIG. 12 is a cross-sectional view taken along the line F12-F12 of FIG. 11.

### DETAILED DESCRIPTION

Embodiments provide a chemical solution discharge device capable of reducing an influence of crosstalk with simple electrode wiring.

In general, according to one embodiment, a chemical solution discharge device for discharging a chemical solution includes substrates, holding containers, a plurality of first actuators, a plurality of second actuators, a first conductive wire, and a second conductive wire. The substrate is formed with a plurality of first pressure chambers and a plurality of second pressure chambers respectively adjacent to the plurality of first pressure chambers, which communicate with nozzles for discharging the chemical solution and are filled with the chemical solution inside; and includes chemical solution supply ports for supplying the chemical solution to the plurality of first pressure chambers and second pressure chambers. The holding container communicates with the plurality of first pressure chambers and second pressure chambers via the chemical solution supply port, and holds the chemical solution. The plurality of first actuators change a pressure of the chemical solution in the plurality of first pressure chambers, and discharge the chemical solution from each of the communicating nozzles. The plurality of second actuators change a pressure of the chemical solution in the plurality of second pressure chambers, and discharge the chemical solution from each of the communicating nozzles. The first conductive wire supplies a first driving signal to the plurality of first actuators. The second conductive wire supplies a second driving signal to the plurality of second actuators. Hereinafter, embodiments will be described with reference to the accompanying drawings. Further, each drawing is a schematic diagram for promoting the embodiment and the understanding thereof. Although the shapes, dimensions, ratios, and the like may be different from actual ones, those can be appropriately modified in design.

### First Embodiment

First, a first embodiment will be described.

A discharge system according to the embodiment discharges a predetermined chemical solution with a piezo jet method.

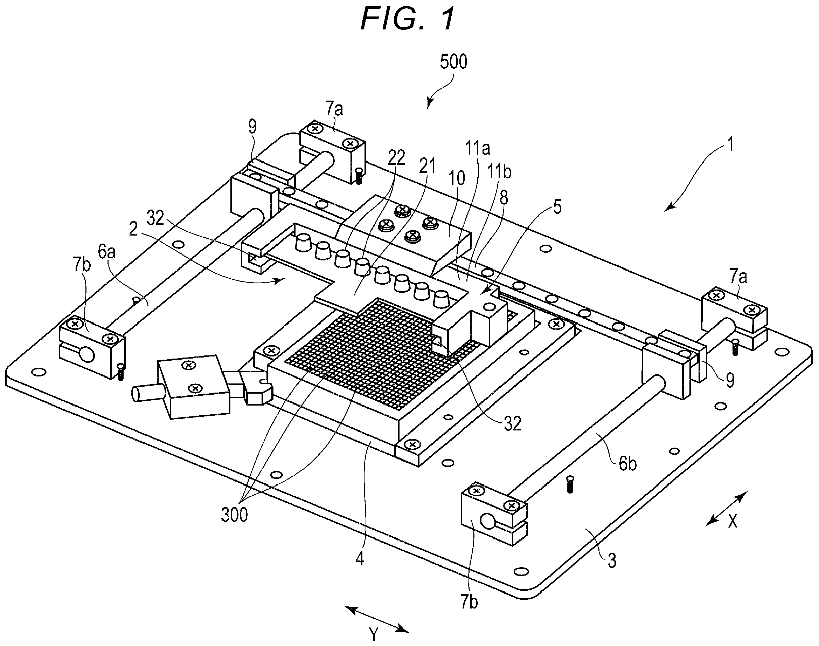

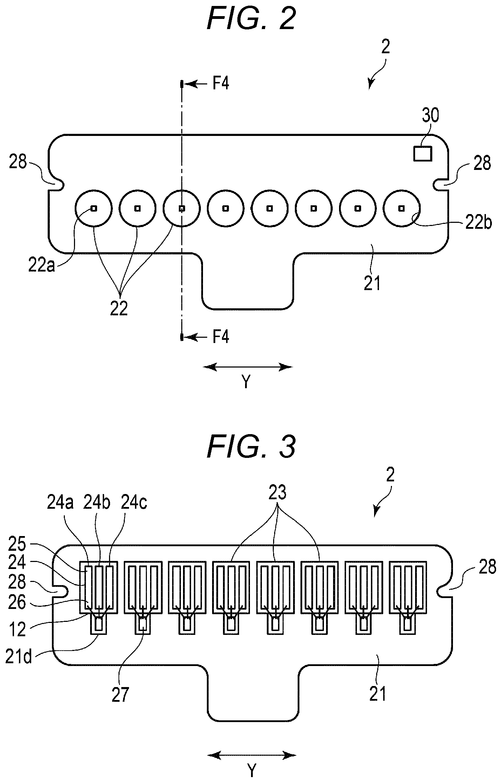

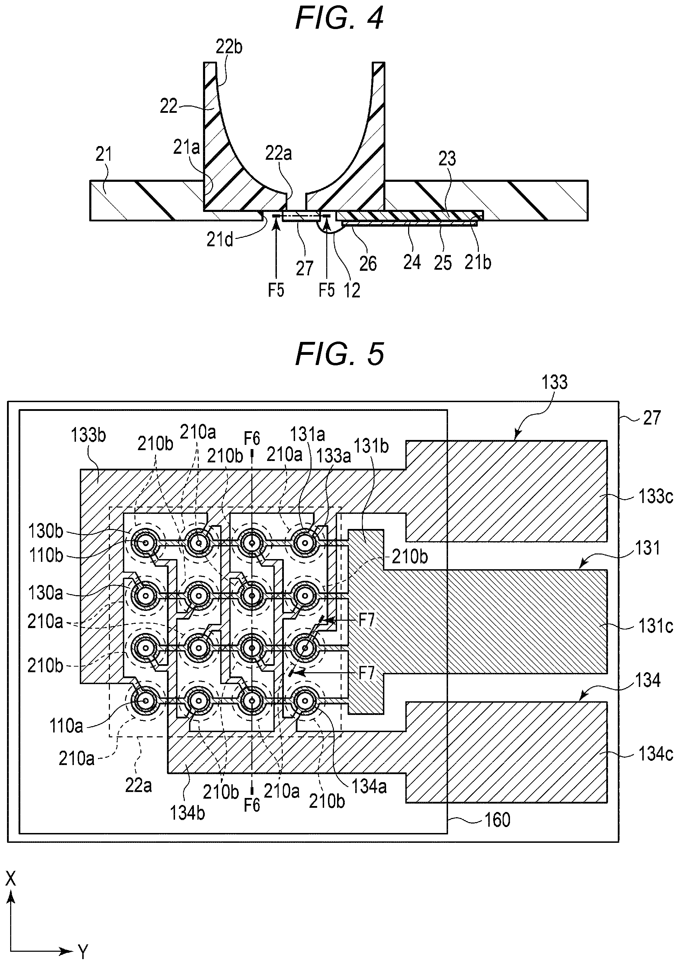

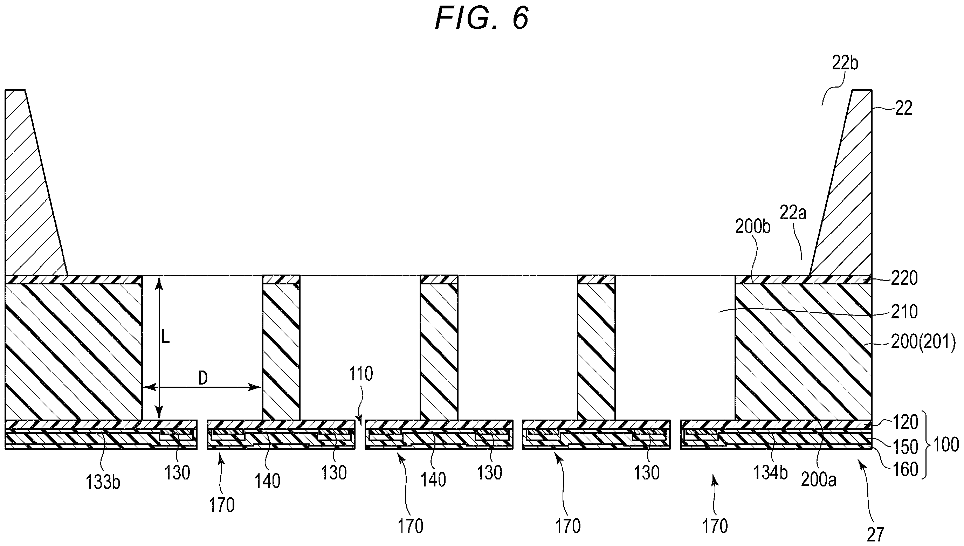

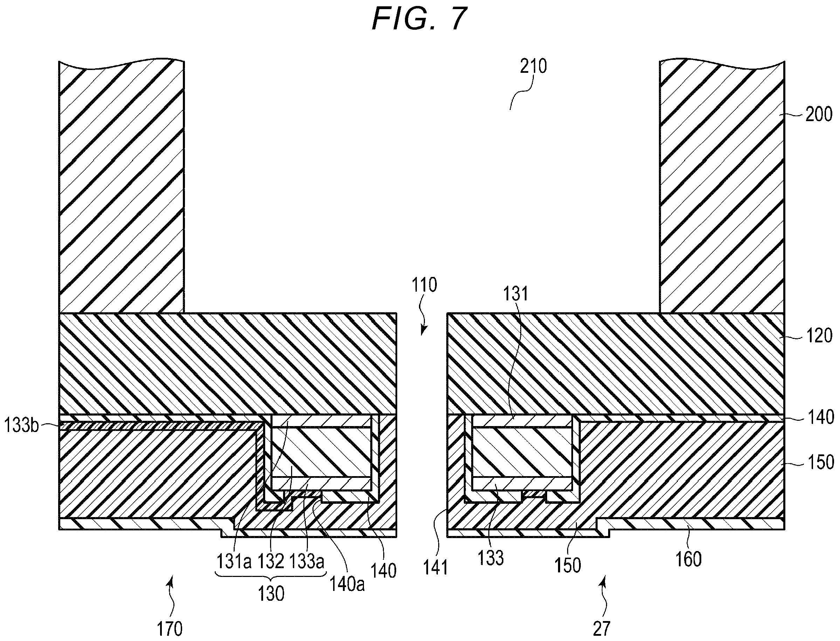

A physical configuration example of the discharge system according to the embodiment will be described with reference to FIGS. 1 to 7. FIG. 1 is a perspective view illustrating a schematic configuration of a discharge system 500. FIG. 2 is a top view of a chemical solution discharge device 2. FIG. 3 is a bottom view illustrating a surface where liquid droplets of the chemical solution discharge device 2 are discharged. FIG. 4 is a cross-sectional view taken along the line F4-F4 of FIG. 2. FIG. 5 illustrates a plan view of the side of discharging liquid droplets of a chemical solution discharge array 27 which is taken along the line F5-F5 of FIG. 4. FIG. 6 is a cross-sectional view taken along the line F6-F6 of FIG. 5. FIG. 7 is a cross-sectional view taken along the line F7-F7 of FIG. 5.

As illustrated in FIG. 1, the discharge system 500 is constituted of a chemical solution dropping apparatus 1, the chemical solution discharge device 2, and the like. Further, the discharge system 500 may be provided with a configuration in response to requirements other than the configuration illustrated in FIG. 1, or may exclude a specific configuration.

The chemical solution dropping apparatus 1 controls the chemical solution discharge device 2, thereby dropping a chemical solution filled in the chemical solution discharge device 2.

The chemical solution dropping apparatus 1 includes a rectangular flat plate-shaped base 3 and a mounting module 5 on which the chemical solution discharge device 2 is mounted. In the embodiment, it is assumed that the chemical solution dropping apparatus 1 drops the chemical solution onto a microplate 4 having 1,536 wells. Here, a front and rear direction of the base 3 is referred to an X-direction (a first direction) and a left and right direction of the base 3 is referred to as a Y-direction (a second direction). The X-direction and the Y-direction are orthogonal to each other.

The microplate 4 is fixed to the base 3. The microplate 4 includes a plurality of well openings 300. Each well opening 300 of the microplate 4 holds a predetermined chemical solution. For example, the chemical solution is a solution containing cells, blood cells, bacteria, plasma, antibodies, DNA, nucleic acids or proteins. A configuration of the chemical solution held in the well opening 300 is not limited to a specific configuration.

The chemical solution dropping apparatus 1 includes a pair of right and left X-direction guide rails 6a and 6b extending in the X-direction on both sides of the microplate 4 on the base 3. Both ends of the respective guide rails 6a and 6b in the X-direction are fixed to fixtures 7a and 7b which are provided on the base 3 to protrude.

A Y-direction guide rail 8 extending in the Y-direction is installed between the X-direction guide rails 6a and 6b. Both ends of the Y-direction guide rail 8 are respectively fixed to an X-direction moving stand 9 movable in the X-direction along the X-direction guide rails 6a and 6b.

The Y-direction guide rail 8 is provided with a Y-direction moving stand 10 on which the mounting module 5 can move in the Y-direction along the Y-direction guide rail 8. The mounting module 5 is mounted on the Y-direction moving stand 10. The chemical solution discharge device 2 is fixed to the mounting module 5.

The chemical solution discharge device 2 is movably supported at an arbitrary position in the orthogonal XY direction by a combination of an operation in which the Y-direction moving stand 10 moves in the Y-direction along the Y-direction guide rail 8 and an operation in which the X-direction moving stand 9 moves in the X-direction along the X-direction guide rails 6a and 6b.

A slit 32 for fixing the chemical solution discharge device 2 is formed in the mounting module 5. When the chemical solution discharge device 2 is inserted into the slit 32 from the front side of the opening part of the slit 32, the chemical solution discharge device 2 is fixed to the chemical solution dropping apparatus 1.

The mounting module 5 includes a first drive circuit 11a and a second drive circuit 11b.

The first drive circuit 11a and the second drive circuit 11b drive the chemical solution discharge device 2. For example, the first drive circuit 11a and the second drive circuit 11b supply a driving signal to the chemical solution discharge device 2 in order to discharge the chemical solution from the chemical solution discharge device 2.

The first drive circuit 11a and the second drive circuit 11b may supply a driving signal to the chemical solution discharge device 2 based upon a signal from a control unit, or the like for controlling the chemical solution dropping apparatus 1. For example, the first drive circuit 11a and the second drive circuit 11b outputs a driving signal to the chemical solution discharge device 2 based upon the signal from the control unit.

The driving signals output from the first drive circuit 11a and the second drive circuit 11b will be described later in detail.

The chemical solution discharge device 2 discharges the chemical solution based upon the control of the chemical solution dropping apparatus 1.

The chemical solution discharge device 2 includes a flat plate-shaped base member 21 which is a rectangular plate-shaped plate body. As illustrated in FIG. 2, a plurality of chemical solution holding containers 22 are arranged in a row in the Y-direction on the surface side of the base member 21. In the embodiment, eight pieces of chemical solution holding containers 22 are described, but the number thereof is not limited to eight. The chemical solution holding container 22 is a bottomed cylindrical container whose upper surface is open as illustrated in FIG. 4. On the surface side of the base member 21, cylindrical recessed parts for the chemical solution holding containers 21a are formed at positions corresponding to respective chemical solution holding containers 22.

A bottom part of the chemical solution holding container 22 is bonded and fixed to the recessed part for the chemical solution holding container 21a. Further, a lower surface opening part 22a serving as a chemical solution outlet is formed at a center position in the bottom portion of the chemical solution holding container 22. An opening area of an upper surface opening part 22b of the chemical solution holding container 22 is larger than an opening area of the lower surface opening part 22a of the chemical solution outlet.

Further, as illustrated in FIG. 2, mounting fixing notches 28 for mounting and fixing the base member 21 to the mounting module 5 are respectively formed at both ends of the base member 21. The mounting fixing notches 28 are engaged with the mounting module 5. The two notches 28 of the base member 21 are formed in a semi-elliptical notch shape. The mounting fixing notch 28 may be a semi-circular, semi-elliptical or triangular notch shape, and the like. In the embodiment, the shapes of the two notches 28 are different from each other. Accordingly, the right and left shapes of the base member 21 are different, such that a posture of the base member 21 is easily checked.

On the reverse surface side of the base member 21 as illustrated in FIG. 3, the same number of electrical substrates 23 as that of the chemical solution holding containers 22 are arranged in a row in the Y-direction. The electrical substrate 23 is a rectangular flat plate member. On the reverse surface side of the base member 21, as illustrated in FIG. 4, a rectangular recessed part for the electrical substrate 21b for mounting the electrical substrate 23, and a chemical solution discharge array part opening 21d communicating with the recessed part for the electrical substrate 21b are formed. A base end of the recessed part for the electrical substrate 21b extends up to a position near an upper end (a position near a right end in FIG. 4) in FIG. 3 of the base member 21. A tip part of the recessed part for the electrical substrate 21b extends up to a position overlapping a portion of the chemical solution holding container 22 as illustrated in FIG. 4. The electrical substrate 23 is bonded and fixed to the recessed part for the electrical substrate 21b.

On the electrical substrate 23, an electrical substrate wiring 24 is patterned and formed on a surface opposite to a bonding and fixing surface of the recessed part for the electrical substrate 21b. The electrical substrate wiring 24 is constituted of wiring patterns 24a, 24b, and 24c. At one end of the wiring patterns 24a, 24b, and 24c, an electrode connection terminal 26 connected to drive elements 130 (first drive elements 130a and second drive elements 130b) via a wiring wire 12 is formed. The wiring patterns 24a, 24b, and 24c are respectively connected to a first upper electrode 133 (a first conductive wire), a lower electrode 131, and a second upper electrode 134 (a second conductive wire) illustrated in FIG. 5 via the electrode connection terminal 26. A control signal input terminal 25 for inputting the driving signal from the first drive circuit 11a and the second drive circuit 11b is formed at one end of the electrical substrate wiring 24. For example, the control signal input terminal 25 has a shape capable of being connected to a leaf spring connector, and the like.

A driving signal from the first drive circuit 11a is input to the wiring pattern 24a and the wiring pattern 24b. That is, a driving signal from the first drive circuit 11a is input as a potential difference between the first upper electrode 133 and the lower electrode 131. A driving signal from the second drive circuit 11b is input to the wiring pattern 24b and the wiring pattern 24c. That is, a driving signal from the second drive circuit 11b is input as a potential difference between the second upper electrode 134 and the lower electrode 131. Here, the lower electrode 131 is assumed to be maintained at a constant voltage.

The first upper electrode 133 is constituted of an electrode part 133a, a wiring part 133b, and a terminal part 133c. The terminal part 133c is electrically connected to one end of the wiring part 133b. The other end of the wiring part 133b is electrically connected to the electrode part 133a.

The first upper electrode 133 is formed of a Pt thin film. As other electrode materials of the first upper electrode 133, Ni (nickel), Cu (copper), Al (aluminum), Ti (titanium), W (tungsten), Mo (molybdenum), Au (gold), SrRuO₃ (strontium ruthenium oxide), and the like can also be used. As another film formation method, vapor deposition and plating can also be used. The first upper electrode 133 can also be used by laminating various metals.

The second upper electrode 134 is constituted of an electrode part 134a, a wiring part 134b, and a terminal part 134c. The terminal part 134c is electrically connected to one end of the wiring part 134b. The other end of the wiring part 134b is electrically connected to the electrode part 134a.

The second upper electrode 134 is formed of a Pt thin film. As other electrode materials of the second upper electrode 134, Ni, Cu, Al, Ti, W, Mo, Au, SrRuO₃, and the like can also be used. As another film formation method, vapor deposition and plating can also be used. The second upper electrode 134 can also be used by laminating various metals.

The lower electrode 131 is constituted of an electrode part 131a, a wiring part 131b, and a terminal part 131c. The terminal part 131c is electrically connected to one end of the wiring part 131b. The other end of the wiring part 131b is electrically connected to the electrode part 131a.

The lower electrode 131 is formed with a thickness of 0.5 µm by laminating Ti (titanium) and Pt (platinum) with, for example, a sputtering method. The film thickness of the lower electrode 131 is approximately in the range of 0.01 to 1 µm. The lower electrode 131 can use other materials such as Ni, Cu, Al, Ti, W, Mo, Au, SrRuO₃, and the like. The lower electrode 131 can also be used by laminating various metals.

Further, the base member 21 is provided with the chemical solution discharge array part opening 21d. As illustrated in FIG. 3, the chemical solution discharge array part opening 21d is a rectangular opening part and is formed at a position overlapping the recessed part for the chemical solution holding container 21a on the surface side of the base member 21.

The chemical solution discharge array 27 is bonded and fixed to the lower surface of the chemical solution holding container 22 in a state of covering the lower surface opening part 22a of the chemical solution holding container 22. The chemical solution discharge array 27 is arranged at a position corresponding to the chemical solution discharge array part opening 21d of the base member 21.

As illustrated in FIG. 5, a plurality of first pressure chambers 210a and a plurality of second pressure chambers 210b are formed in a lattice shape in the chemical solution discharge array 27. Here, the first pressure chambers 210a and the second pressure chambers 210b are arranged in 4×4 rows.

The plurality of first pressure chambers 210a are formed at predetermined gaps. Further, the plurality of first pressure chambers 210a are formed at positions diagonally opposite to each other.

The second pressure chambers 210b are adjacent to the first pressure chambers 210a. As illustrated in FIG. 5, the second pressure chambers 210b are adjacent to the first pressure chambers 210a in an X-axis direction and a Y-axis direction. That is, the first pressure chambers 210a and the second pressure chambers 210b are alternately formed in the X-axis direction and the Y-axis direction.

As illustrated in FIG. 6, the chemical solution discharge array 27 is formed by laminating a nozzle plate 100 and a pressure chamber structure body 200. The nozzle plate 100 includes nozzles 110 (first nozzles 110a and second nozzles 110b), a diaphragm 120, the drive elements 130 (the first drive elements 130a and the second drive elements 130b) which are driving units, an insulating film 140 which insulates the lower electrode 131, the wiring part 133b of the first upper electrode 133, and the wiring part 134b of the second upper electrode 134, a protective film 150 which is a protective layer, and a liquid repellent film 160. An actuator 170 is constituted by the diaphragm 120 and the drive element 130. The plurality of nozzles 110 of the embodiment are positioned inside the lower surface opening part 22a of the chemical solution outlet of the chemical solution holding container 22.

The diaphragms 120 are deformed in the thickness direction by the operation of the planar drive elements 130. The deformation of the diaphragm 120 causes a change of the volume of the pressure chambers 210 of the pressure chamber structure body 200, which changes the pressure of the chemical solution in the pressure chambers 210, and therefore, the chemical solution discharge device 2 discharges the chemical solution supplied to the nozzles 110.

Volumes of the first pressure chambers 210a are changed by the driving of the first drive element 130a. Further, the first nozzles 110a communicating with the first pressure chambers 210a are formed in the chemical solution discharge array 27. The chemical solution in the first pressure chambers 210a is discharged through the first nozzles 110a. The first drive element 130a is electrically connected to the electrode part 133a and the electrode part 131a.

Volumes of the second pressure chambers 210b are changed by the driving of the second drive element 130b. Further, the second nozzles 110b communicating with the second pressure chambers 210b are formed in the chemical solution discharge array 27. The chemical solution in the second pressure chambers 210b is discharged through the second nozzles 110b. The second drive element 130b is electrically connected to the electrode part 134a and the electrode part 131a.

That is, the first drive elements 130a are electrically connected to the first drive circuit 11a by the first upper electrode 133 and the lower electrode 131. Further, the second drive elements 130b are electrically connected to the second drive circuit 11b by the second upper electrode 134 and the lower electrode 131.

The plurality of nozzles 110 are arranged in 4×4 rows with respect to the well opening 300 of one 1536-Well microplate. For example, an opening size of the well opening 300 of the 1536-Well microplate is a square whose one side is about 1.7 mm. A distance between the centers of the neighboring nozzles 110 among the plurality of nozzles 110 arranged in 4×4 rows is 0.25 mm. The size of the center of the nozzles 110 of 4×4 rows disposed in the well opening 300 is 0.75 mm in the X-direction and 0.75 mm in the Y-direction, and is smaller than the size of the well opening 300 of the 1536-well microplate.

The diaphragm 120 is formed integrally with, for example, the pressure chamber structure body 200. When a silicon wafer 201 for manufacturing the pressure chamber structure body 200 is heated in an oxygen atmosphere, a SiO₂ (silicon oxide) film is formed on the surface of the silicon wafer 201. The diaphragm 120 uses the SiO₂ (silicon oxide) film on the surface of the silicon wafer 201 formed by the heat processing in the oxygen atmosphere. The diaphragm 120 may be formed by forming the SiO₂ (silicon oxide) film on the surface of the silicon wafer 201 with a CVD method (a chemical vapor deposition method).

A film thickness of the diaphragm 120 is preferably in the range of 1 to 30 µm. The diaphragm 120 can use a semiconductor material such as SiN (silicon nitride), and the like, or Al₂O₃ (aluminum oxide), and the like instead of the SiO₂ (silicon oxide) film. The drive element 130 is formed in each of nozzles 110. The drive element 130 has an annular shape surrounding the nozzle 110. The shape of the drive element 130 is not limited thereto, and may have, for example, a C-shape in which a part of an annular ring is cut off.

As illustrated in FIG. 7, the drive element 130 includes the electrode part 131a and the electrode part 133a or the electrode part 134a sandwiched a piezoelectric film 132 which is a piezoelectric body.

In FIG. 5, the piezoelectric film 132 is formed between the electrode part 131a and the electrode part 133a in the first drive element 130a. Further, the piezoelectric film 132 is formed between the electrode part 131a and the electrode part 134a in the second drive element 130b.

The electrode part 131a, the piezoelectric film 132, and the electrode part 133a or the electrode part 134a are coaxial with the nozzle 110 and have a circular pattern of the same size.

The piezoelectric film 132 is, for example, a piezoelectric material having a thickness of 2 µm. The piezoelectric film 132 is formed of PZT (Pb(Zr, Ti)O₃: lead zirconate titanate). The piezoelectric film 132 is, for example, coaxial with the nozzle 110, and has an annular shape having an outer diameter of 133 µm and an inner diameter of 42 µm which are the same as that of the electrode part 131a. The film thickness of the piezoelectric film 132 is approximately in a range of 1 to 5 µm. The piezoelectric film 132 can also use piezoelectric materials such as, for example, PTO (PbTiO₃: lead titanate), PMNT (Pb(Mg_{1/3}Nb_{2/3})O₃-PbTiO₃), PZNT (Pb(Zn_{1/3}Nb_{2/3})O₃-PbTiO₃), ZnO, A1N, and the like.

The piezoelectric film 132 generates polarization in the thickness direction. When an electric field in the same direction as the polarization is applied to the piezoelectric film 132, the piezoelectric film 132 expands and contracts in a direction orthogonal to an electric field direction. In other words, the piezoelectric film 132 contracts or expands in the direction orthogonal to the film thickness.

The nozzle plate 100 includes the insulating film 140 which insulates the lower electrode 131 and the first upper electrode 133 or the second upper electrode 134. The insulating film 140 covers the electrode part 131a, the piezoelectric film 132, and the periphery of the electrode part 133a in a formation area of the first drive elements 130a. Also, the insulating film 140 covers the electrode part 131a, the piezoelectric film 132, and the periphery of the electrode part 134a in a formation area of the second drive elements 130b.

Further, the insulating film 140 covers the wiring part 131b of the lower electrode 131. The insulating film 140 covers the diaphragm 120 in a partial area of the wiring part 133b of the first upper electrode 133 and the wiring part 134b of the second upper electrode 134. Further, the insulating film 140 includes a contact part 140a which is an opening part for electrically connecting the electrode part 133a and the wiring part 133b of the first upper electrode 133, or the electrode part 134a and the wiring part 134b of the second upper electrode 134.

The protective film 150 includes a cylindrical chemical solution passing part 141 communicating with the nozzle 110 of the diaphragm 120.

The nozzle plate 100 includes the liquid repellent film 160 covering the protective film 150. The liquid repellent film 160 is formed by spin-coating, for example, a silicon-based resin having a characteristic of repelling a chemical solution. The liquid repellent film 160 can also be formed of a material having a characteristic of repelling a chemical solution such as a fluorine-containing resin, and the like.

The pressure chamber structure body 200 includes a warpage reduction film 220 which is a warpage reduction layer on a surface of the side opposite to the diaphragm 120. The pressure chamber structure body 200 includes the pressure chambers 210 which penetrate the warpage reduction film 220, reach the position of the diaphragm 120, and communicate with the nozzles 110. The pressure chamber 210 is formed, for example, in a circular shape positioned coaxially with the nozzle 110.

The pressure chamber 210 includes an opening part (a chemical solution supply port) communicating with the lower surface opening 22a of the chemical solution holding container 22. Preferably, a size L in a depth direction of the opening part of the pressure chamber 210 is larger than a size D in a width direction thereof. A pressure applied to the chemical solution in the pressure chamber 210 delays escaping to the chemical solution holding container 22 by setting the size L in the depth direction > the size D in the width direction and by the vibration of the diaphragm 120 of the nozzle plate 100.

The side where the diaphragm 120 of the pressure chamber 210 is disposed is defined as a first surface 200a, and the side where the warpage reduction film 220 is disposed is defined as a second surface 200b. The chemical solution holding container 22 adheres to the side of the warpage reduction film 220 of the pressure chamber structure body 200 by, for example, an epoxy type adhesive. The pressure chamber 210 of the pressure chamber structure body 200 communicates with the lower surface opening part 22a of the chemical solution holding container 22 at the opening part on the side of the warpage reduction film 220.

Next, an operation example in which the discharge system 500 discharges the chemical solution will be described.

The chemical solution discharge device 2 of the discharge system 500 is fixed to the mounting module 5 of the chemical solution dropping apparatus 1 to be used. For example, an operator inserts the chemical solution discharge device 2 into the slit 32 of a module main body 15 from the front side of the opening part of the slit 32 of the module main body 15 in order to mount the chemical solution discharge device 2 on the mounting module 5.

When the operator inserts the chemical solution discharge device 2 into the slit 32, the operator supplies a predetermined amount of the chemical solution into the chemical solution holding container 22 from the upper surface opening part 22b of the chemical solution holding container 22 by a pipetter (not illustrated), and the like. The chemical solution is held in an inner surface of the chemical solution holding container 22. The lower surface opening part 22a at the bottom of the chemical solution holding container 22 communicates with the chemical solution discharge array 27. Therefore, the chemical solution held in the chemical solution holding container 22 is filled in each pressure chamber 210 of the chemical solution discharge array 27 via the lower surface opening part 22a of the bottom surface of the chemical solution holding container 22.

The chemical solution held in the chemical solution discharge device 2 contains any one of, for example, a low molecular weight compound, a fluorescent reagent, a protein, an antibody, a nucleic acid, plasma, bacteria, blood cells, and cells. The main solvent of the chemical solution (a substance having the highest weight ratio or volume ratio) is generally water, glycerin, dimethyl sulfoxide. The configuration of the chemical solution held in the chemical solution discharge device 2 is not limited to a specific configuration.

When supplying the chemical solution to the chemical solution holding container 22, the operator inputs an operation of starting the discharge of the chemical solution to the chemical solution dropping apparatus 1. Further, the operator may input an operation of allowing a host computer and the like for controlling the chemical solution dropping apparatus 1 to start the discharge of the chemical solution into the chemical solution dropping apparatus 1.

When receiving the input of the operation, the chemical solution dropping apparatus 1 supplies a driving signal for causing the chemical solution discharge device 2 to discharge the chemical solution. That is, the first drive circuit 11a and the second drive circuit 11b supply the driving signals to the first drive elements 130a and the second drive elements 130b of the chemical solution discharge device 2, respectively. The driving signal is supplied from the electrode connection terminal 26 of the electrical substrate wiring 24 to the lower electrode 131, the first upper electrode 133, and the second upper electrode 134. In response to the application of the driving signal to the drive element 130, the diaphragm 120 of the actuator 170 deforms, thereby changing the volume of the pressure chamber 210. By the change of the pressure of the chemical solution in the pressure chamber 210, the chemical solution is discharged as a chemical solution droplet from the nozzle 110 of the chemical solution discharge array 27. As a result, the chemical solution discharge device 2 drops a predetermined amount of liquid into each well opening 300 of the microplate 4 from the nozzles 110.

For example, the liquid volume of one drop discharged from the nozzle 110 of the chemical solution discharge device 2 is 2 to 5 pL. Therefore, the chemical solution dropping apparatus 1 can control to drop the liquid in the order of pL to µL into each well opening 300 of the microplate 4 by controlling the number of drops.

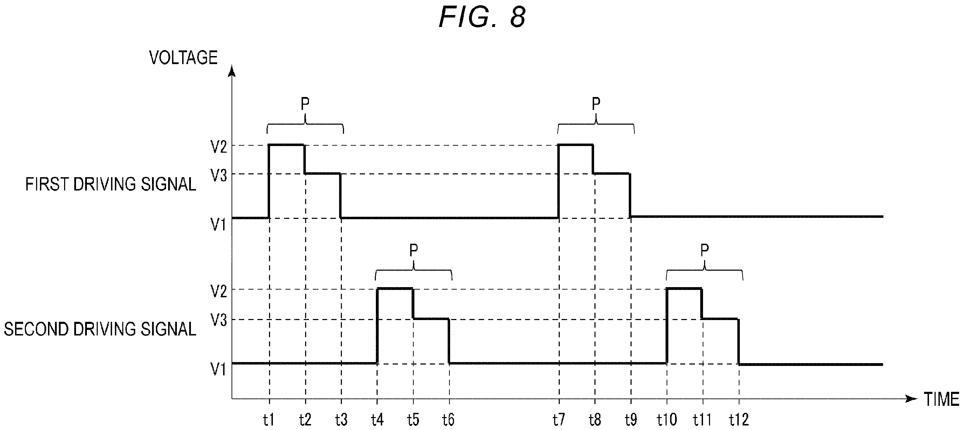

FIG. 8 illustrates driving signals output from the first drive circuit 11a and the second drive circuit 11b. In the example illustrated in FIG. 8, a first driving signal is a driving signal supplied to the first drive elements 130a from the first drive circuit 11a. A second driving signal is a driving signal supplied to the second drive elements 130b from the second drive circuit 11b.

Here, the first driving signal indicates a voltage applied to the first upper electrode 133 by the first drive circuit 11a. Further, the second driving signal indicates a voltage applied to the second upper electrode 134 by the second drive circuit 11b. Further, the first drive circuit 11a and the second drive circuit 11b apply V2 to the lower electrode 131.

First, the first driving signal will be described.

The first drive circuit 11a applies voltages of V1, V2, or V3 to the first upper electrode 133. Here, it is set to be V1 < V3 < V2. Further, V1 is 0 V.

In an initial state (a period until t1 or a period from t3 to t7), the first drive circuit 11a applies V1 to the first upper electrode 133. In this case, V2 is applied between the lower electrode 131 and the first upper electrode 133, and an electric field is generated in the thickness direction of the first drive element 130a. As a result, the first drive element 130a contracts in a direction orthogonal to the thickness direction. By the contraction of the first drive element 130a, a stress is generated in the direction of contraction with regard to the diaphragm 120 and the protective film 150.

Here, Young's modulus of the diaphragm 120 is larger than that of the protective film 150. Therefore, the protective film 150 contracts more than the diaphragm 120 in the direction orthogonal to the thickness direction. As a result, the actuator 170 curves in the direction of extending into the first pressure chamber 210a. Therefore, the volume of the first pressure chamber 210a becomes smaller than that of when the electric field is not generated in the thickness direction of the first drive element 130a. The first drive circuit 11a applies a driving pulse P (a first driving pulse) to the first drive element 130a of the first pressure chamber 210a. The driving pulse P is formed of a depressurization pulse and a pressurization pulse. In the example illustrated in FIG. 8, the depressurization pulse is applied during a period from t1 to t2, and the pressurization pulse is applied during a period from t2 to t3.

The first drive circuit 11a applies the depressurization pulse to the first upper electrode 133. That is, the first drive circuit 11a applies V2 to the first upper electrode 133 during the period from t1 to t2. When V2 is applied to the first upper electrode 133, a potential difference is eliminated between the lower electrode 131 and the first upper electrode 133. As a result, the electric field disappears in the thickness direction of the first drive element 130a, and the first drive element 130a expands to the original length. Therefore, the curvature of the actuator 170 is eliminated, and thus, the volume of the first pressure chamber 210a becomes larger than that of the initial state. When the volume of the first pressure chamber 210a expands, the pressure of the chemical solution in the first pressure chamber 210a is lowered. Therefore, the position of the meniscus of the chemical solution in the first nozzle 110a recedes toward the inside of the first pressure chamber 210a. Thereafter, the chemical solution is supplied from the chemical solution holding container 22 to the first pressure chamber 210a. As a result, the pressure of the chemical solution in the first pressure chamber 210a is once lowered, but then the pressure thereof increases.

The first drive circuit 11a applies the pressurization pulse to the first upper electrode 133 after applying the depressurization pulse. That is, the first drive circuit 11a applies V3 to the first upper electrode 133 during the period from t2 to t3. When V3 is applied to the first upper electrode 133, a voltage (V2-V3) is applied between the lower electrode 131 and the first upper electrode 133, and thus, the electric field is generated in the thickness direction of the first drive element 130a. As a result, the first drive element 130a contracts in the direction orthogonal to the thickness direction, and the actuator 170 curves in the direction of extending into the first pressure chamber 210a. Accordingly, the volume of the first pressure chamber 210a decreases. Further, the volume of the first pressure chamber 210a at this time is larger than that of the initial state.

Since the volume of the first pressure chamber 210a decreases at the time of t2, the pressure of the chemical solution in the first pressure chamber 210a further increases. As a result, the position of the meniscus of the chemical solution in the first nozzle 110a starts to advance outward and the chemical solution is discharged from the first nozzle 110a. During the period when the pressurization pulse is applied, the chemical solution is continuously discharged from the first nozzle 110a.

Further, during the period when the pressurization pulse is applied, the pressure of the chemical solution in the first pressure chamber 210a continuously decreases from the time of t2. At the time of t3, the pressure of the chemical solution in the first pressure chamber 210a becomes the minimum (a state of negative pressure). As a result, the meniscus of the chemical solution in the first nozzle 110a stops discharging. However, the chemical solution already discharged from the nozzle 110 forms a liquid droplet and continues to fly.

At this timing of t3, the first drive circuit 11a applies V1 to the first upper electrode 133. As a result, the volume of the first pressure chamber 210a becomes the same as the volume of the initial state. As a result, the pressure of the first pressure chamber 210a is pressurized from the state of the negative pressure to become substantially zero, and thus, pressure vibration of the chemical solution is stopped. That is, the pressure vibration of the chemical solution in the first pressure chamber 210a is canceled by the displacement of the actuator 170 at the time of t3, and then is stopped. Therefore, at the time of t3, the pressure in the first pressure chamber 210a becomes approximately zero (approximately atmospheric pressure).

Even after the time of t3, the chemical solution droplet discharged from the first nozzle 110a flies toward the well opening 300 of the microplate 4. As the chemical solution droplet flies, a tail of the chemical solution droplet and the chemical solution in the first nozzle 110a are naturally cut, and the meniscus of the chemical solution in the first nozzle 110a is formed again near the position in the nozzle of when the chemical solution is filled. As described above, the chemical solution droplet is dropped from the first nozzle 110a of the first pressure chamber 210a toward the inside of the well opening 300 of the microplate 4 by the driving pulse P.

The first drive circuit 11a applies V1 to the first drive element 130a during the period from t3 to t7.

The first drive circuit 11a applies the driving pulse P to the first drive element 130a again during a period from t7 to t9. The first drive circuit 11a discharges the chemical solution droplet again from the first nozzle 110a of the first pressure chamber 210a by applying the driving pulse P. The first drive circuit 11a applies the driving pulse P a plurality of times, thereby discharging the chemical solution droplet a plurality of times.

Next, the second driving signal will be described.

The second drive circuit 11b applies the driving pulse P to the second drive element 130b of the second pressure chamber 210b during a period different from the period during which the first drive circuit 11a applies the driving pulse P.

Here, in an initial state (a period until t3 or a period from t6 to t10), the second drive circuit 11b applies V1 to the first upper electrode 133. As a result, the volume of the second pressure chamber 210b becomes smaller than that of when the electric field is not generated in the second drive element 130b.

The second drive circuit 11b applies the driving pulse P (the second driving pulse) to the second drive element 130b during a period from t4 to t6. Since the operation of causing the second drive circuit 11b to discharge the chemical solution droplet from the second nozzle 110b is the same as the operation of causing the first drive circuit 11a to discharge the chemical solution droplet, the description thereof will be omitted. The second drive circuit 11b applies V1 to the second drive element 130b during the period from t6 to t10.

The second drive circuit 11b applies the driving pulse P to the second drive element 130b again during a period from t10 to t12. The second drive circuit 11b discharges the chemical solution droplet again from the second nozzle 110b of the second pressure chamber 210b by applying the driving pulse P. The second drive circuit 11b discharges the chemical solution droplet a plurality of times by applying the driving pulse P a plurality of times.

As described above, the chemical solution discharge device 2 drops the chemical solution droplet into the well opening 300 from each nozzle 110 by the first driving signal from the first drive circuit 11a and the second driving signal from the second drive circuit 11b.

The chemical solution dropping apparatus 1 moves the chemical solution discharge device 2 in the X-direction or the Y-direction. The chemical solution dropping apparatus 1 discharges the chemical solution into the well opening 300 again after moving the chemical solution discharge device 2. The chemical solution dropping apparatus 1 repeats the above-described operation, thereby discharging the chemical solution into the well opening 300.

Further, the chemical solution discharge device 2 may be also provided with the first pressure chambers 210a of the first drive elements 130a connected to the first upper electrode 133 and the second pressure chambers 210b of the second drive elements 130b connected to the second upper electrode 134 in a row. In this case, the chemical solution discharge device 2 is alternately provided with a row of the first pressure chambers 210a and a row of the second pressure chambers 210b.

Further, the first drive circuit 11a and the second drive circuit 11b may be formed as one drive circuit.

The discharge system configured as described above applies the driving pulse to the first drive element during the period when the driving pulse is not applied to the second drive element. Further, the discharge system applies the driving pulse to the second drive element during the period when the driving pulse is not applied to the first drive element.

Therefore, while the first drive elements are driven, the second drive elements adjacent to the first drive elements are not driven. As a result, the first pressure chambers are not affected by crosstalk from the neighboring second pressure chambers. In the same manner, the second pressure chambers are not affected by crosstalk from the neighboring first pressure chambers. Therefore, since the chemical solution discharge device can prevent a discharge failure by reducing the influence of the crosstalk, the chemical solution discharge device can drop an accurate amount of the chemical solution.

Further, the chemical solution discharge device is also provided with the first upper electrode connected to the plurality of first drive elements and the second upper electrode connected to the plurality of second drive elements. Therefore, the chemical solution discharge device can reduce the influence of the crosstalk with simple connection wiring.

### Second Embodiment

Hereinafter, a second embodiment will be described.

The discharge system 500 according to the second embodiment is different from that of the first embodiment in that the second drive circuit 11b applies the depressurization pulse during the period when the first drive circuit 11a applies the pressurization pulse. Accordingly, other elements are denoted by the same reference signs and the detailed descriptions thereof will be omitted.

Since a configuration of the discharge system 500 according to the second embodiment is the same as that of the first embodiment, the description thereof will be omitted.

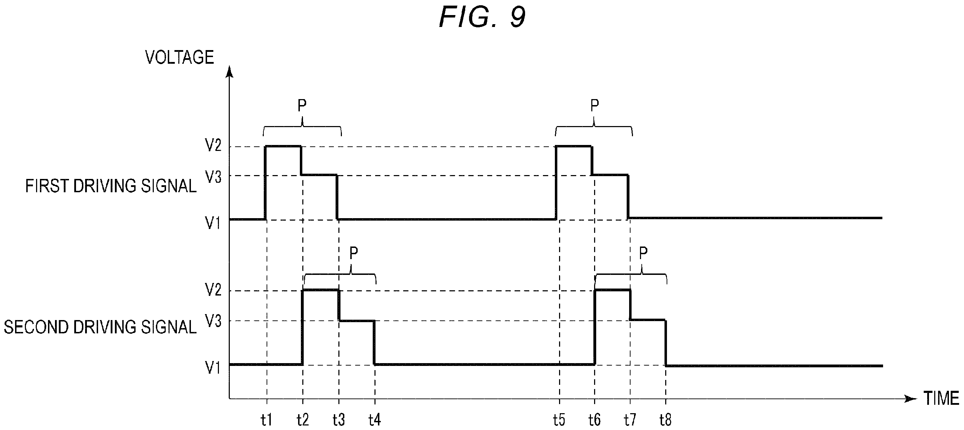

Next, the driving signals output from the first drive circuit 11a and the second drive circuit 11b will be described. FIG. 9 illustrates the driving signals output from the first drive circuit 11a and the second drive circuit 11b. In the example illustrated in FIG. 9, the first driving signal is a driving signal supplied to the first drive element 130a by the first drive circuit 11a. The second driving signal is a driving signal supplied to the second drive element 130b by the second drive circuit 11b.

First, the first driving signal will be described.

The first drive circuit 11a applies the driving pulse P to the first drive element 130a during a period from t1 to t3. The first drive circuit 11a applies the depressurization pulse of the driving pulse P during a period from t1 to t2. Further, the first drive circuit 11a applies the pressurization pulse of the driving pulse P during a period from t2 to t3.

The first drive circuit 11a applies V1 to the first drive element 130a during a period from t3 to t5.

The first drive circuit 11a applies the driving pulse P to the first drive element 130a during a period from t5 to t7. The first drive circuit 11a applies the depressurization pulse of the driving pulse P during a period from t5 to t6. Further, the first drive circuit 11a applies the pressurization pulse of the driving pulse P during a period from t6 to t7.

Next, the second driving signal will be described.

The second drive circuit 11b applies the driving pulse P to the second drive element 130b during a period from t2 to t4. The second drive circuit 11b applies the depressurization pulse of the driving pulse P during the period from t2 to t3. Further, the second drive circuit 11b applies the pressurization pulse of the driving pulse P during a period from t3 to t4.

The second drive circuit 11b applies V1 to the second drive element 130b during a period from t4 to t6.

The second drive circuit 11b applies the driving pulse P to the second drive element 130b during a period from t6 to t8. The second drive circuit 11b applies the depressurization pulse of the driving pulse P during a period from t6 to t7. Further, the second drive circuit 11b applies the pressurization pulse of the driving pulse P during a period from t7 to t8.

As described above, during the period from t2 to t3, the first drive circuit 11a applies the pressurization pulse to the first drive element 130a, and the second drive circuit 11b applies the depressurization pulse to the second drive element 130b. Further, during the period from t6 to t7, the first drive circuit 11a applies the pressurization pulse to the first drive element 130a, and the second drive circuit 11b applies the depressurization pulse to the second drive element 130b. That is, the second drive circuit 11b applies the driving pulse P so that the depressurization pulse is applied during the period when the first drive circuit 11a applies the pressurization pulse.

The discharge system configured as described above applies the depressurization pulse to the second drive element while applying the pressurization pulse to the first drive element. Therefore, while the pressure of the chemical solution in the first pressure chamber increases, the pressure of the chemical solution in the second pressure chamber decreases. As a result, the pressure vibration generated from the chemical solution in the first pressure chamber and the pressure vibration generated from the chemical solution in the second pressure chamber cancel each other. Therefore, since the chemical solution discharge device can prevent a discharge failure by reducing the influence of the crosstalk from the pressure chambers adjacent to each other, the chemical solution discharge device can drop an accurate amount of the chemical solution.

### Third Embodiment

Next, a third embodiment will be described.

A discharge system according to the third embodiment is different from that of the first embodiment in that the chemical solution discharge device outputs driving signals applied to the first drive elements 130a and the second drive elements 130b. Accordingly, other elements are denoted by the same reference signs and the detailed descriptions thereof will be omitted.

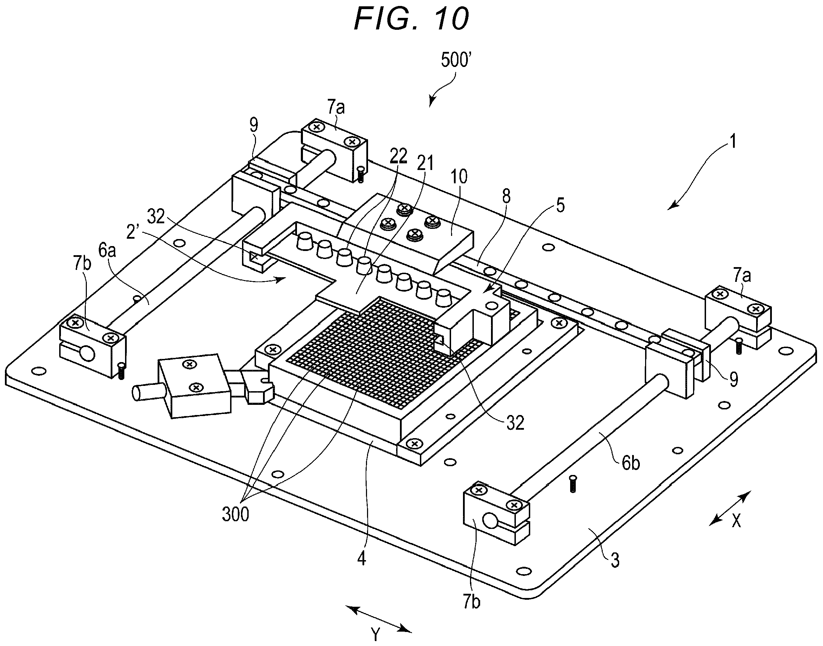

FIG. 10 is a perspective view illustrating a schematic configuration of a discharge system 500' according to the third embodiment.

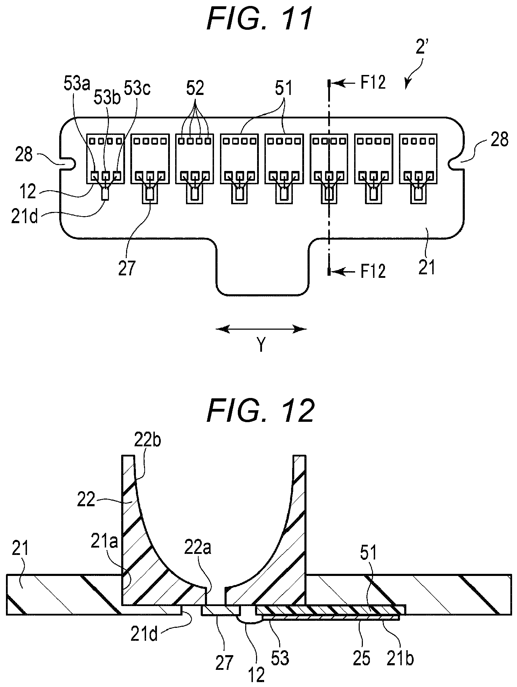

FIG. 11 is a bottom view illustrating a surface on which a liquid droplet of a chemical solution discharge device 2' is discharged. FIG. 12 is a cross-sectional view taken along the line F12-F12 of FIG. 11.

As illustrated in FIG. 10, the discharge system 500' includes the chemical solution discharge device 2'.

As illustrated in FIG. 11, drive circuit substrates 51 of the same number as the chemical solution holding containers 22 are arranged in a row in the Y-direction on the reverse surface side of the base member 21.

The drive circuit substrate 51 is a rectangular flat plate member. The recessed part for the rectangular electrical substrate 21b for mounting the drive circuit substrate 51 is formed on the reverse surface side of the base member 21 as illustrated in FIG. 12. Further, the chemical solution discharge array part opening 21d communicating with the recessed part for the electrical substrate 21b is formed on the reverse surface side of the base member 21.

In the drive circuit substrate 51, drive circuit input terminals 52 and drive circuit output terminals 53a, 53b, and 53c are formed on a surface opposite to the surface to which the recessed part for the electrical substrate 21b is bonded and fixed.

The drive circuit input terminals 52 are connection parts for inputting a control signal of the drive circuit and a power supply voltage of the drive circuit from the outside.

The drive circuit output terminals 53a, 53b, and 53c are connection parts for being connected to the terminal part 133c, the terminal part 131c, and the terminal part 134c formed in the chemical solution discharge array 27. The drive circuit output terminal 53a supplies a first driving signal generated by the drive circuit substrate 51 to the terminal part 133c of the first upper electrode 133. The drive circuit output terminal 53b supplies a constant voltage (V2) generated by the drive circuit substrate 51 to the terminal part 131c of the lower electrode 131. The drive circuit output terminal 53c supplies a second driving signal generated by the drive circuit substrate 51 to the terminal part 134c of the second upper electrode 134.

Next, an operation example in which the discharge system 500' discharges the chemical solution will be described.

The chemical solution discharge device 2' of the discharge system 500' is fixed to the mounting module 5 of the chemical solution dropping apparatus 1 to be used. For example, an operator inserts the chemical solution discharge device 2' into the slit 32 of the module main body 15 from the front side of the opening part of the slit 32 of the module main body 15 in order to mount the chemical solution discharge device 2' on the mounting module 5.

When the operator inserts the chemical solution discharge device 2' into the slit 32, the operator supplies a predetermined amount of the chemical solution into the chemical solution holding container 22 from the upper surface opening part 22b of the chemical solution holding container 22 by a pipetter (not illustrated), and the like. The chemical solution is held in an inner surface of the chemical solution holding container 22. The lower surface opening part 22a at the bottom of the chemical solution holding container 22 communicates with the chemical solution discharge array 27. Therefore, the chemical solution held in the chemical solution holding container 22 is filled in each pressure chamber 210 of the chemical solution discharge array 27 via the lower surface opening part 22a of the bottom surface of the chemical solution holding container 22.

When supplying the chemical solution into the chemical solution holding container 22, the operator inputs an operation of starting the discharge of the chemical solution to the chemical solution dropping apparatus 1. Further, the operator may input an operation of allowing a host computer and the like for controlling the chemical solution dropping apparatus 1 to start the discharge of the chemical solution to the chemical solution dropping apparatus 1.

When receiving the input of the operation, the chemical solution dropping apparatus 1 supplies a start signal for starting the discharge of the chemical solution to the drive circuit substrates 51 of the chemical solution discharge device 2'.

When receiving the start signal, the drive circuit substrate 51 of the chemical solution discharge device 2' supplies driving signals to the first drive elements 130a and the second drive elements 130b.

The driving signals are supplied from the drive circuit output terminals 53a, 53b, and 53c to the terminal part 133c of the first upper electrode 133, the terminal part 131c of the lower electrode 131, and the terminal part 134c of the second upper electrode 134, respectively.

The drive circuit substrate 51 supplies a first driving signal to the first drive elements 130a. That is, the drive circuit substrate 51 applies the first driving signal to the first upper electrode 133. Further, the drive circuit substrate 51 supplies a second driving signal to the second drive elements 130b. That is, the drive circuit substrate 51 applies the second driving signal to the second upper electrode 134. Further, the drive circuit substrate 51 applies V2 to the lower electrode 131.

Since the first driving signal and the second driving signal are the same as those of the first embodiment, the descriptions thereof will be omitted.

The chemical solution discharge device 2' drops a chemical solution droplet into the well opening 300 from each nozzle 110 according to the first driving signal and the second driving signal supplied from the drive circuit substrate 51.

The chemical solution dropping apparatus 1 moves the chemical solution discharge device 2' in the X-direction or the Y-direction. The chemical solution dropping apparatus 1 discharges the chemical solution into the well opening 300 again after moving the chemical solution discharge device 2'. The chemical solution dropping apparatus 1 repeats the above-described operation, thereby discharging the chemical solution into the well opening 300.

Further, the drive circuit substrate 51 may be constituted of the first drive circuit for outputting the first driving signal and the second drive circuit for outputting the second driving signal.

Further, the drive circuit substrate 51 may output the first driving signal and the second driving signal according to the second embodiment.

Since the chemical solution discharge device of the third embodiment configured as described above includes the drive circuit substrates for outputting the first driving signal and the second driving signal, and can prevent a discharge failure by reducing the influence of the crosstalk, an accurate amount of the chemical solution can be dropped.

In the embodiments described above, the drive element 130 which is the drive part is a circular shape, but the shape of the drive part is not limited thereto. The shape of the drive part may be, for example, a rhombus or an ellipse, and the like. Further, the shape of the pressure chamber 210 is not limited to a circular shape, but may be a rhombus or ellipse, or a rectangle, and the like.

Further, in the embodiments, the nozzle 110 is disposed at the center of the drive element 130, but the position of the nozzle 110 is not limited thereto as long as the chemical solution in the pressure chamber 210 can be discharged. For example, the nozzle 110 may be formed not within the area of the drive element 130, but may be formed outside the drive element 130.

According to at least one embodiment described above, it is possible to provide a chemical solution discharge device capable of reducing the influence of the crosstalk with simple electrode wiring.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the scope of the inventions. The accompanying claims and their equivalents are intended to cover such forms or modifications as would fall within the scope of the inventions.

## Claims

1. A chemical solution discharge device for discharging a chemical solution, comprising:
a substrate comprising a plurality of first pressure chambers and a plurality of second pressure chambers respectively adjacent to the plurality of first pressure chambers, which communicate with nozzles for discharging the chemical solution and are filled with the chemical solution, and chemical solution supply ports for supplying the chemical solution to the plurality of first pressure chambers and second pressure chambers;
holding containers configured to communicate with the plurality of first pressure chambers and second pressure chambers via the chemical solution supply ports, and to hold the chemical solution;
a plurality of first actuators configured to change a pressure of the chemical solution in the plurality of first pressure chambers, and to discharge the chemical solution from the nozzles;
a plurality of second actuators configured to change a pressure of the chemical solution in the plurality of second pressure chambers, and to discharge the chemical solution from the nozzles;
a first conductive wire configured to supply a first driving signal to the plurality of first actuators; and
a second conductive wire configured to supply a second driving signal to the plurality of second actuators.

2. The chemical solution discharge device according to claim 1, wherein
the plurality of second pressure chambers are respectively adjacent to the plurality of first pressure chambers in a first direction and a second direction orthogonal to the first direction.

3. The chemical solution discharge device according to claim 1 or 2, wherein
the first conductive wire supplies, as the first driving signal, a first driving pulse for discharging the chemical solution from the nozzles communicating with the plurality of first pressure chambers, and
the second conductive wire supplies, as the second driving signal, a second driving pulse for discharging the chemical solution from the nozzles communicating with the plurality of second pressure chambers during a period different from a period during which the first driving pulse is supplied from the first conductive wire.

4. The chemical solution discharge device according to any one of claims 1 to 3, wherein
the first conductive wire supplies, as the first driving signal, a first driving pulse formed of a depressurization pulse for expanding a volume of the plurality of first pressure chambers and a pressurization pulse for reducing the volume of the first pressure chambers to discharge the chemical solution from the nozzles communicating with the plurality of first pressure chambers,
the second conductive wire supplies, as the second driving signal, a second driving pulse formed of a depressurization pulse for expanding the volume of the plurality of second pressure chambers and a pressurization pulse for reducing the volume of the second pressure chambers to discharge the chemical solution from the nozzles communicating with the plurality of second pressure chambers, and
the second conductive wire supplies the depressurization pulse of the second driving signal during a period when the first conductive wire supplies the pressurization pulse of the first driving pulse.

5. The chemical solution discharge device according to any one of claims 1 to 4, further comprising:
a first drive circuit configured to output the first driving signal; and
a second drive circuit configured to output the second driving signal.

6. The chemical solution discharge device according to any one of claims 1 to 5, wherein each of the plurality of first actuators and second actuators comprises a piezoelectric film.

7. The chemical solution discharge device according to any one of claims 1 to 6, wherein each of the plurality of first pressure chambers and second pressure chambers has a size L in a depth direction larger than a size D in a width direction.

8. A chemical solution processing system, comprising: the chemical solution discharge device according to any one of claims 1 to 7 and a chemical solution dropping apparatus, wherein the chemical solution discharge device is fixed to a mounting module of the chemical solution dropping apparatus.
